# EUROPEAN PATENT APPLICATION

(11) **EP 3 205 878 A1**
(43) Date of publication of application: **16.08.2017**
(21) Application number: 17162244.2
(22) Date of filing: 23.09.2014
(51) Int. Cl.: F04B 9/125, F04B 13/00, F04B 15/02, F04B 53/12, F04B 19/22, F04B 23/02, F04B 53/16, F04B 53/18, G01F 13/00, G01F 15/00

(54) **METERING DEVICE FOR DELIVERY OF A LIQUID OR VISCOUS SUBSTANCE**

(30) Priority: 24.09.2013 EP 13185675
(62) Divisional of application: 14771593.2
(71) Applicant: Optimol Tribotechnik S.A., 1070 Bruxelles (BE); Memolub International SA, 1070 Bruxelles (BE); Van Damme, Eric, 1420 Braine l'Alleud (BE)
(72) Inventor: VAN DAMME, Eric, 1420 Braine-L'Alleud (BE); LUANG-RAJ, Amathith, 7700 Mouscron (BE)
(74) Representative: Office Kirkpatrick

(57) **Abstract**

A device for metered delivery of a viscous substance comprising a casing (1) arranged with an inlet (14) and at least one outlet (13), a piston (6) with a piston rod (8) able to slide in said casing (1), a metering chamber (16) and a first and a second non return valves wherein:
- lubricant is sucked into the metering chamber through the inlet only when the piston rod is forced upwards, through the first non-return valve (14), and
- the lubricant contained in the metering chamber is expelled through the outlet (13)only when the piston rod is forced downwards, through the second non-return valve (18).

## Description

### Field of the invention

The invention relates to a device for metered delivery of a liquid or viscous substance, especially a lubricant needing to be delivered to points of machines or apparatuses.

### Description of prior art

Machines and apparatuses have numerous points needing lubrication with oils or greases or both in accordance with a predetermined lubrication plan. In many cases, machines and apparatuses, even nowadays, are lubricated manually which is costly and often not reliable. Lack of correct lubrication is the cause of costly parts replacement and production loss. However, machines and apparatuses are increasingly equipped with central automatic lubrication systems. Several devices for automatic lubrication are described in the prior art.

EP0120522 provides a pneumatically operated pump with a pressurised reservoir for grease lubrication systems. The constant high pressure applied to the reservoir in this type of systems has a deleterious effect when the lubricant is grease. This kind of systems often works at very high pressure, 250 bar systems are not uncommon. This high level of pressure is partially attributable to the lengthy high pressure tubing required to deliver lubricant to the different points of machines or apparatuses. In the particular case of greases, high pressure can cause separation of oil from the thickener or soap. This phenomenon can lead to clogging of the system, failure and high replacement cost. Initial investment can be high and maintenance is complex.

Furthermore, in this kind of pump, the residual volume, which is the fraction of the volume of the intermediate chamber (or metering chamber) which cannot be emptied from its content and which corresponds to the volume of the intermediate chamber at the end of the delivery stroke, is non-negligible. This non-negligible residual volume is deleterious for the volumetric efficiency of the pump, which is the ratio between the actual volume of lubricant expelled at every pumping cycle and the volumetric capacity of the pump. From a practical point of view, the existence of a non-negligible residual volume implies that it is impossible to create a high level vacuum in the intermediate chamber. This is especially a problem when the residual volume is at least partially filled with air (or any other gas). Indeed, due to the high compressibility of a gas compared to a lubricant, this airlock undergoes compression-expansion cycles during the alternating of suction and delivery strokes of the piston rod. This phenomenon impedes the priming of the suction cycle since it reduces the vacuum level generated in the metering chamber. Since the unwanted aspiration of air bubbles in the metering chamber during the suction stroke is a recurrent and almost inexorable problem occurring in pumps for lubricant delivery, a non-negligible residual volume is a major problem which is generally compensated in the prior art by a further increase in the pressure applied to the lubricant.

Moreover, the random variation at every cycle of this air quantity locked in the metering chamber prevents an accurate metering of the lubricant volume because it induces a variation of lubricant intake in metering chamber at every suction stroke.

US5876189 describes a metering device for the precise feeding of a liquid as an oil lubricant. The structure of this device makes it possible to vary the position of the "metering chamber" in order to meter the quantity of lubricant expelled through the outlet of the pump. However, this metering of the lubricant is made at the expense of an increase of the residual volume remaining in the metering chamber at the end of the compression stage. As explained above, a non-negligible residual volume has a deleterious effect on the volumetric efficiency of the pump. Besides, this system, like the one described in EP0120522, requires a spring to ensure the back motion of the piston, which implies that during the forth motion of the piston, the spring force has to be overcome by compressed air, which increases the pneumatic pressure required to operate the system.

### Summary of the invention

It is a primary object of the invention to provide a pneumatic pump for metering delivery of a liquid, particularly a viscous substance, especially a lubricant, overcoming the aforementioned drawbacks of the devices from the prior art.

For this purpose, the present invention provides a device as defined in claim 1.

In an advantageous embodiment, the piston is a differential piston of which the larger cross-section is acted upon by a pneumatic pressure, whereas the smaller cross-section pumps the liquid or viscous substance in and out the metering chamber.

In another embodiment, the system is driven by an hydraulic fluid. In this case, the ratio of hydraulic piston surface to grease pump piston surface is advantageously of about 1:1, the ratio being adapted according to the available hydraulic pressure.

In another advantageous embodiment, the larger cross-section of the piston is slidably mounted in a pneumatic chamber, and divides the pneumatic chamber into two sub chambers, each said sub chamber being sealingly insulated from the other by the larger cross-section, each sub chamber being provided with an air inlet and an air outlet, for receiving an actuating force of compressed air allowing to vary the position of the larger cross-section in the pneumatic chamber. Air outlets are present in order to allow a series connection of several devices supplied with the same compressed air source. The installation of devices in series allows the lubrication of very numerous points. Consequently, the lubricant can be pumped at a lower pressure than the pressure required with the devices of the prior art, this being due to the reduced tube length between these numerous points and devices according to the invention. When only one device is used, no air outlet is required or alternatively air outlets have to be plugged.

In an advantageous embodiment, the device according to the invention is connected in series with at least one other similar device containing a different liquid or viscous substance.

The choice of surface ratio of pneumatic piston to pump piston determines the output pressure of the pumped fluid. For example, a ratio of 20 to 1 allows for the fluid to be pumped at 100 bar pressure with 5 bar air pressure.

In an advantageous embodiment, the device according to the invention comprises an adjustable means for limiting the stroke of the piston in order to meter the quantity of liquid or viscous substance brought to the at least one outlet of the device.

Metering of liquid or viscous substance delivery is further adjusted by controlling the timing device activating the pneumatic force of compressed air. The adjustable means can for example be an adjustable screw placed on the larger cross-section of the piston.

In another advantageous embodiment, the device according to the invention comprises several outlets for liquid or viscous substance delivery, the central bore of the piston connecting successively during its stroke said several outlets.

In another advantageous embodiment, the device according to the invention comprises flow control detectors to monitor the flow of delivered lubricant. Flow control detectors can comprise magnetic gearings placed in at least one outlet of the device.

In another advantageous embodiment, the inlet of the metering chamber communicates with a container comprising a follower plate and a cover which maintains the unit in position. Standard industrial containers, following plates and covers can be used. Clearly, the device according to the invention does not require the application of a constant pressure on the lubricant as it is disclosed in some devices from the prior art.

An advantage of the device is the reduction of the residual volume to a value close to zero. This is due to the particular layout of the device. Indeed, at end of the discharge stroke, both non-return valves arranged face to face are close to each other and can even substantially contact each other in some embodiments of the invention. In some embodiments, means can however be placed to prevent a direct contact between the two valves. Since in the device according to the invention, the residual volume corresponds to the space between these valves, it is obvious that at the end of the discharge stroke, the residual volume is very close to zero. This feature solves the aforementioned problems due to the non-negligible residual volume found in the devices from the prior art. In particular, the device according to the invention does not require the application of a constant pressure on the lubricant as it is disclosed in some devices from the prior art.

Another advantage of the device is that when it is used in its advantageous embodiment with a differential piston, low pressure pneumatic piping can be used.

Furthermore, since the device consists essentially of one moving part and two valves, maintenance is clearly much simpler to carry out than the devices from the prior art. Moreover, when the advantageous embodiment with a pneumatic chamber is used, several devices can be installed in series in which case all devices operate at the same frequency. Devices according to the invention can also be used in parallel in which case each device is controlled by a separate pneumatic valve and timer. Each device can pump a different lubricant if necessary for the application, for example standard grease for bearings, oil for chains, food grade grease, high temperature grease, etc.

Another advantage is the simplicity of control which consists mainly of monitoring proper functioning of the system. Flow control detectors can be fitted to activate alarms in case of malfunction.

### Short description of the drawings

These and further aspects of the invention will be explained in greater detail by way of example and with reference to the accompanying drawings in which:
- Fig.1: shows a longitudinal cross-section of the device;
- Fig.2: shows a longitudinal cross-section of the device, placed in a standard industrial lubricant container;
- Fig.3: shows a longitudinal cross-section of a device according to the invention comprising several outlets, placed in a standard industrial lubricant container;

The figures are not drawn to scale. Generally, identical components are denoted by the same reference numerals in the figures.

### Detailed description of preferred embodiments

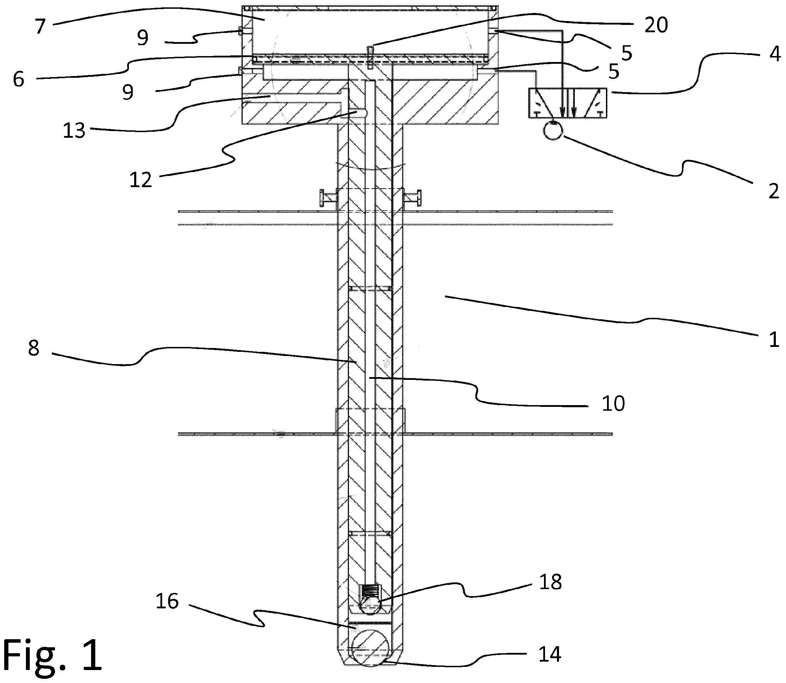

The device of Fig. 1 consists of a casing 1 supplied with compressed air. A timer 2 activates a standard electro-pneumatic valve 4 to alternatively supply air under pressure through air inlets 5 to the upper or lower surface of the largest cross-section of the piston 6. The piston cross-section 6 is slidably mounted in a pneumatic chamber 7, and divides the pneumatic chamber into two sub chambers, each sub chamber being sealingly insulated from the other by said larger cross-section, each sub chamber being provided with an air inlet 5 and an air outlet 9, for receiving an actuating force of compressed air allowing to vary the position of said piston larger cross-section in said pneumatic chamber, said outlets 9 being present in order to allow a series connection of several devices supplied with the same compressed air source. When only one device is used, outlets 9 have to be plugged.

The piston larger cross-section 6 is mounted on a piston rod 8 having a central bore 10. A passage 12 connecting the central bore 10 to an outlet 13 in the casing is provided on the piston rod 8 close to the piston cross-section 6. A non-return valve 18 is mounted at the opposite end of the piston rod 8. The non-return valve 18 is a ball check valve provided with a spring. This non-return valve 18 communicates with a metering chamber 16 delimited by the non-return valve 18 and another non-return valve 14 communicating with the outside of the device. The non-return valve 14 is a classical ball check valve.

During the first cycle, air under pressure applied to the lower surface of the pneumatic piston forces the piston rod 8 upwards and consequently creates a vacuum in the metering chamber 16. Simultaneously, non-return valve 14 opens and lubricant is sucked into the metering chamber 16.

During the second cycle air under pressure applied to the upper surface of the piston cross-section 6 forces the piston rod 8 downwards and lubricant contained in the metering chamber 16 is forced into the central bore 10 of the piston rod by the action of closed non-return valve 14 and opened non-return valve 18. The lubricant is subsequently expelled trough outlet 13.

Dimension of the valves and particularly their proximity assure good priming properties and precise metering.

Metering is obtained by adjusting the timer 2 to obtain regular pumping cycles at a desired frequency. Typical frequency settings could be one expulsion every 60 minutes and a 10 minutes suction cycle.

Output metering at each cycle is obtained by adjusting the stroke limiting screw 20 and thus the stroke of the piston rod 8 and maximal volume of metering chamber. Maximal volume of metering chamber is adjustable from full 100% output to reduced 30% output.

Such device solves the aforementioned drawbacks of the prior art and provides excellent results for greases having an NLGI consistency number up to 3 and an oil ISO viscosity grade of the order of 1000.

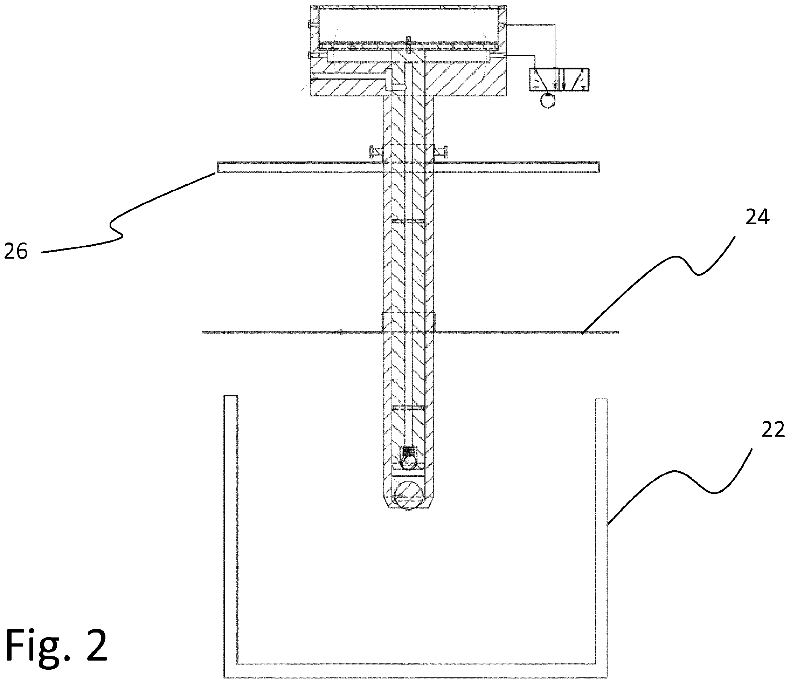

As it can be seen in Fig. 2, the unit must be installed in a container 22 with a follower plate 24 and a cover 26 which maintains the unit in position. Standard industrial containers, following plates and covers can be used. Clearly, the device according to the invention does not require the application of a constant pressure on the lubricant as it is disclosed in some devices from the prior art.

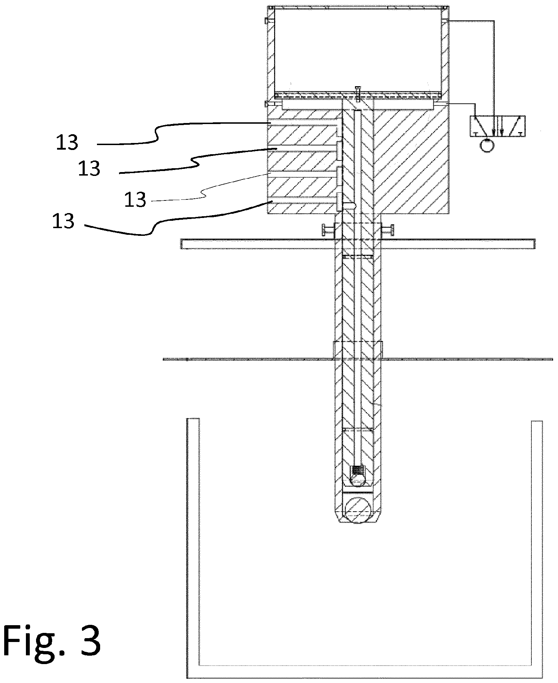

The embodiment of the device according to the invention shown in Fig. 3 differs from the first embodiment due to the plurality of outlets 13 it comprises. In this embodiment, the different outlets 13 are successively connected to the passage 12 leading to the central bore 10 during the piston stroke. This feature is of particular interest when several points of a machine or apparatus need lubrication. Indeed, this embodiment of the device according to the invention makes it possible to bring lubricant at several points of a machine with only one metering device.

## Claims

1. A device for metered delivery of a viscous substance comprising a casing (1) arranged with an inlet (14) and at least one outlet (13), a piston (6) with a piston rod (8) able to slide in said casing (1), a metering chamber (16) and a first and a second non return valves wherein:
- lubricant is sucked into the metering chamber through the inlet only when the piston rod is forced upwards, through the first non-return valve (14), and
- the lubricant contained in the metering chamber is expelled through the outlet (13)only when the piston rod is forced downwards, through the second non-return valve (18).

2. A device according to claim 1, wherein the piston rod (8) has a bore (10) connected to the outlet (13) and is mounted with the second non-return valve (18) communicating with the metering chamber (16).

3. A device according to claim 2, wherein the metering chamber (16) is delimited by the non-return valve (18) mounted on the piston rod (8), the casing (1) and the inlet (14).

4. A device according to claims 1 to 3, wherein part of the piston (6) is slidably mounted in a pneumatic chamber (7) for receiving an actuating force of compressed air.

5. A device according to claim 4, wherein the piston (6) is a differential piston of which a larger cross section is acted upon by a pneumatic pressure and a smaller cross section is arranged to pump the lubricant in and out of the metering chamber.

6. A device according to claims 4 or 5, wherein the part of the piston (6) slidably mounted in the pneumatic chamber (7) divides the pneumatic chamber into two sub-chambers, each sub-chamber being arranged for receiving an actuating force of compressed air allowing to vary the position of the piston in the chamber.

7. A device according to one of claims 1 to 6, further comprising a timing device (2) for controlling the metered delivery of the lubricant.

8. A device according to claim 7, wherein the timing device (2) is arranged for setting the frequency of pumping cycles.

9. A device according to claim 4 and claims 7 or 8, wherein the timing device activates the pneumatic force of compressed air.

10. A device according to claim 4 and one of claim 7 to 9, wherein the pneumatic chamber (7) is arranged with an electro-pneumatic valve (4) activated by the timer (2).

11. A device according to one of claims 1 to 10, wherein the casing (1) comprises several outlets (13).

12. A device according to one of claims 1 to 11, comprising means for limiting the stroke of the piston (6) in order to meter the quantity of lubricant brought to the outlet (13) of the device.
